# EUROPEAN PATENT SPECIFICATION

(11) **EP 4 116 562 B1**
(45) Date of publication and mention of the grant of the patent: **19.06.2024**
(21) Application number: 22177422.7
(22) Date of filing: 07.06.2022
(51) Int. Cl.: F02C 9/28, F02C 6/00

(54) **GAS TURBINE ENGINE AND OPERATING METHOD**
GASTURBINENMOTOR UND BETRIEBSVERFAHREN
MOTEUR À TURBINE À GAZ ET PROCÉDÉ DE FONCTIONNEMENT

(30) Priority: 06.07.2021 GB 202109740
(43) Date of publication of application: 11.01.2023
(73) Proprietor: Rolls-Royce plc, London N1 9FX (GB)
(72) Inventor: Bellis, Mark, Derby, DE24 8BJ (GB)
(74) Representative: Rolls-Royce plc

(56) References cited:
- US-A1- 2020 200 099
- US-A1- 2021 025 339
- US-B2- 10 619 573

## Description

The present disclosure concerns a gas turbine engine for an aircraft and a method of operation of a gas turbine engine.

There is a continued need for aircraft gas turbines having lower fuel consumption. A particular issue surrounding gas turbine engines comprises maintaining high efficiency at low thrust settings. At low thrust settings, fuel flow may be relatively high relative to the amount of thrust generated, resulting in high thrust Specific Fuel Consumption (SFC). At idle, where no or very little thrust is required, large amounts of fuel must still be burned in the combustor, in order to maintain the compressor at a sufficiently high rotational speed to supply pressurised air to the combustor to maintain engine stability and to allow for acceleration away from idle. Consequently, it is desirable to provide an engine and method of operation that reduces fuel burn at idle. The document US 2021/025339 discloses a gas turbine controller according to the prior art.

According to a first aspect there is provided a gas turbine engine controller, the gas turbine engine comprising:
a compressor;
a combustor; and
a motor configured to drive the compressor; wherein the controller is configured to:
   in a first idle mode, control combustor fuel flow to maintain compressor rotational speed at or above a first predetermined value; and
   in a second idle mode, control combustor fuel flow and the motor to drive the compressor to maintain the compressor rotational speed at or above a second predetermined value, lower than the first predetermined value; characterised in that:
      the combustor comprises a plurality of fuel injectors, and wherein the controller is configured to operate only a subset of the fuel injectors during operation in the second idle mode.

Advantageously, by using the motor to drive the compressor, a lower idle rotational speed can be attained, which enables less fuel to be burned than at higher rotational speeds.

The motor may comprise one of a pneumatic motor, a hydraulic motor and an electric motor.

The second predetermined compressor rotational speed may comprise a speed sufficient to maintain compressor delivery pressure and / or mass flow at a value above a predetermined minimum necessary to sustain combustion.

The combustor comprises a plurality of fuel injectors. The controller is configured to operate only a subset of the fuel injectors during operation in the second idle mode. Advantageously, by operating only a subset of the fuel injectors, the correct stoichiometry within the combustion zones of the combustor can be maintained in spite of the reduced air mass flow during operation in the second idle mode.

The combustor may comprise a staged lean-burn combustor comprising one or more pilot injectors and one or more main injectors.

The controller may additionally be configured to operate the gas turbine engine in a starting mode, in which the engine is accelerated from an offline condition to one of the first and second idle modes.

The controller may be configured to operate the gas turbine engine in a shutdown mode comprising operating the gas turbine engine in the second idle mode, followed by shutting down the engine.

According to a second aspect of the invention there is provided a gas turbine engine comprising a controller in accordance with the first aspect.

The gas turbine engine may comprise independently rotatable first and second compressors. The second compressor may be provided downstream in core flow of the first compressor, and the motor may be coupled to the second compressor.

In a first idle mode, the controller may be configured to control combustor fuel flow to maintain second compressor rotational speed at or above a predetermined value; and
in a second idle mode, the controller may be configured to control the electric motor to drive the second compressor to maintain the compressor rotational speed at or above a second predetermined value, lower than the first predetermined value.

According to a third aspect, there is provided a method of controlling a gas turbine engine, the gas turbine engine comprising:
a compressor;
a combustor; and
a motor configured to drive the compressor; wherein the method comprises:
   in a first idle mode, controlling combustor fuel flow to maintain compressor rotational speed at or above a predetermined value; and
   in a second idle mode, controlling combustor fuel flow and the motor to drive the compressor to maintain the compressor rotational speed at or above a second predetermined value, lower than the first predetermined value; characterised in that:
      the combustor comprises a plurality of fuel injectors, and wherein the controller operates only a subset of the fuel injectors during operation in the second idle mode.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is a plan view of a first aircraft;
**Figure 2** is a schematic diagram of a gas turbine engine for the aircraft of figure 1;
**Figure 3** is a sectional front view of combustion equipment of the gas turbine engine of figure 2;
**Figure 4** is a sectional side view of the combustion equipment of figure 3;
**Figure 5** is a flow diagram illustrating operation at idle for the gas turbine engine of figure 2; and
**Figure 6** is a schematic diagram of a second gas turbine engine for the aircraft of figure 1.

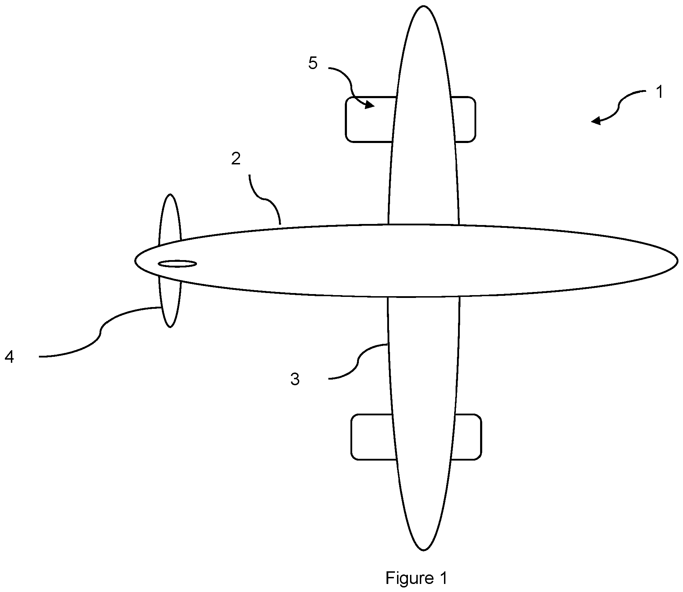

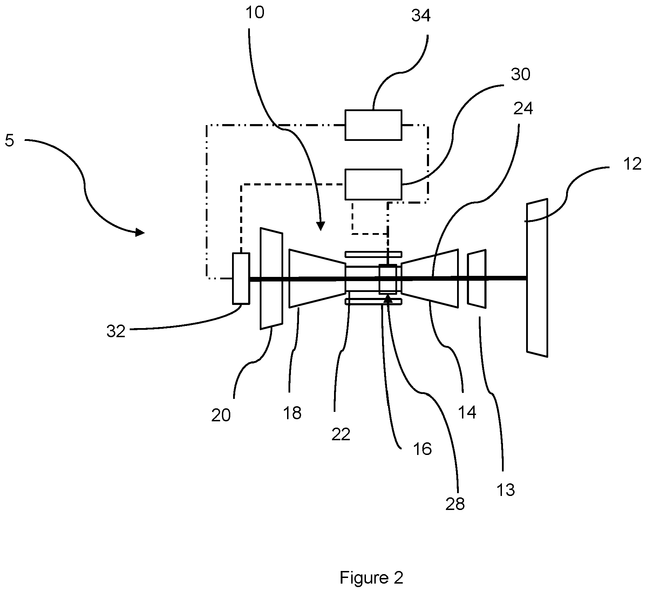

With reference to Figure 1, an aircraft 1 is shown. The aircraft 1 is of conventional configuration, having a fuselage 2, wings 3, tail 4 and a pair of propulsion systems 5. One of the propulsion systems 5 is shown in figure detail in figure 2.

Figure 2 shows the propulsion system 5 schematically. The propulsion system 5 includes a gas turbine engine 10. The gas turbine engine 10 comprises, in axial flow series, a propulsor in the form of a fan 12, a first compressor 13 in the form of a low-pressure compressor 13 (also known as an intermediate-pressure, or booster compressor), a second compressor in the form of a high-pressure compressor 14, combustion equipment comprising a combustor 16, and high and low-pressure turbines 18, 20.

The gas turbine engine 10 works in the conventional manner so that air is accelerated by the fan 12 to produce two air flows: a first core air flow into the compressors 13, 14 and a second air flow which bypasses the compressors 13, 14 to provide propulsive thrust. The core air flows through the low-pressure compressor 13 where it is compressed, before being delivered downstream to the high-pressure compressor 14 where it is further compressed, before delivering that air to the combustion equipment 16, where it is mixed with fuel and the mixture combusted. The resultant hot combustion products then expand through, and thereby drive the turbines 18, 20 before being exhausted through a nozzle to provide additional propulsive thrust. The high-pressure turbine 18 drives the high-pressure compressor 14 via a high-pressure interconnecting shaft 22. Similarly, the low-pressure turbine 20 drives the low-pressure compressor 13 via a low-pressure interconnecting shaft 24.

Other gas turbine engines to which the present disclosure may be applied may have alternative configurations. By way of example such engines may have an alternative number of interconnecting shafts (e.g. three) and/or an alternative number of compressors and/or turbines. For example, the present invention may be applicable to engines having a single compressor, turbine and shaft which rotate together. Further, the engine may comprise a reduction gearbox provided in the drive train from a turbine to a compressor and/or fan.

The propulsion system 5 further comprises one or more electrical machines driving the first and / or second compressors 13, 14. In particular, the system 5 comprises an electric motor 28 coupled to the high-pressure shaft 22 and configured to drive the high-pressure compressor 14. The motor 28 is of a conventional type, such as an induction or permanent magnet electric machine. In this embodiment, the electric motor 28 is of a "core shaft mounted" type, in which a rotor of the motor 28 is mounted directly to a surface of the high-pressure shaft 22, and is surrounded by a stator, provided radially outwardly of the rotor, though it will be appreciated that other mounting arrangements, such as tower shafts and bevel gears, would be suitable. The stator comprises electrical windings (not shown), which can be energised to produce a rotating magnetic field. This rotating magnetic field interacts with a magnetic field of the rotor, to cause rotation when acting as a motor. Consequently, the high-pressure compressor may be powered by either or both of the gas turbine engine 10 via the high-pressure turbine 18, and the motor 28.

The electric motor 28 is coupled to an energy storage device 30 in the form of one or more of a chemical battery, fuel cell, and capacitor, which provides the electric motor 28 with electrical power during operation. In some cases, multiple energy storage systems, which may be of different types (chemical battery, fuel cell etc) may be provided for each propulsion system 5. In other cases, a common energy storage device 30 may be provided for multiple propulsion systems.

The propulsion system optionally further comprises a generator 32, which is electrically coupled to one or both of the motor 28 and the energy storage device 30, such that additional electrical energy can be provided in operation, either directly to the motor 28, or via the energy storage device 30. The generator 32 is typically driven by the low-pressure shaft 24 of the gas turbine engine 10. The generator 32 may be coupled to the shaft 24 via a gearbox and / or clutch to allow for selectively connecting and disconnecting the generator 32 from the shaft 24. In some cases, the motor 28 may act as a generator when motoring is not required.

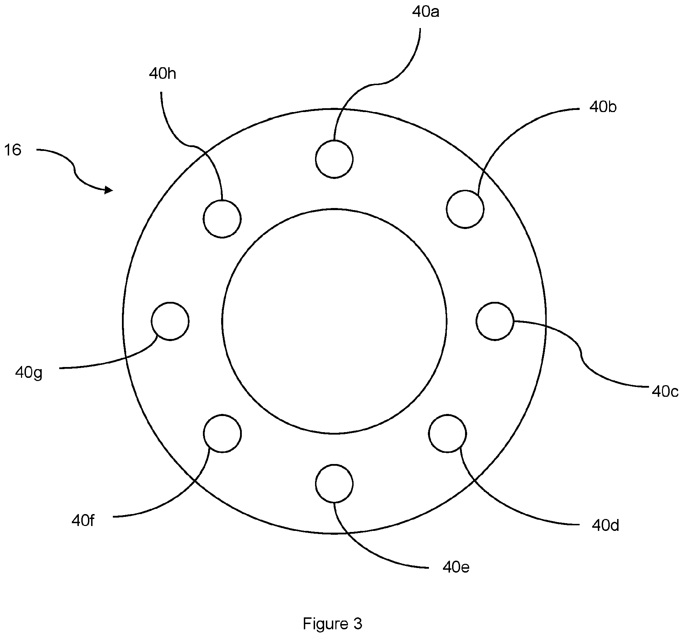

The combustor 16 is shown in further detail in figure 3. The combustor 16 comprises a plurality of fuel injector arrangements 40a-h annularly arranged about the combustor 16.

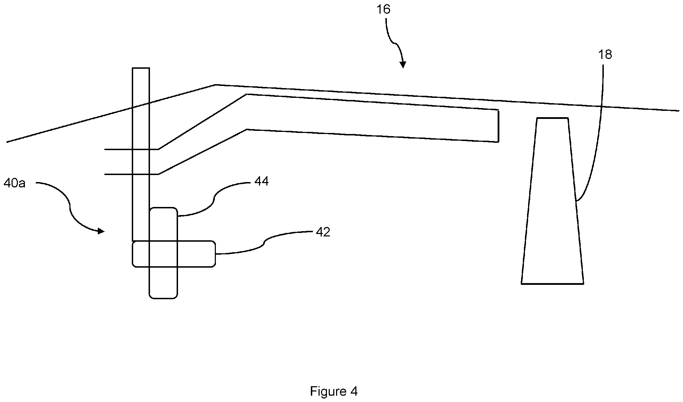

One of the fuel injector arrangements 40a is shown in further detail in figure 4. The combustor is of a staged lean-burn type, in which each fuel injector arrangement comprises a pilot injector 42, and a main injector 44. As will be understood, the control method of the present disclosure could also be applied to a conventional rich burn combustor having a single injector per station.

Returning to figure 2, a controller 34 is provided, which is configured to control at least the motor 28, energy storage device 30 and combustor 16, to control the torque provided by the motor 28, the charging / discharging of the energy storage device 30, the fuel flow rate through the injectors 40a-h, and the rotational speed of the high-pressure compressor 14. The controller 34 may also be configured to control operation of the generator 32, to control electrical power produced by the generator 32.

Before the below method is operated, the engine is first started from an offline condition in an ignition mode, and brought to stability. Typically, stability is defined as where the engine is running at idle at a consistent rotational speed, without assistance from the starter being required. The starting method may be electrical, i.e. via the electric motor 28, or by any other method, such as a pneumatic or hydraulic starter motor (not shown).

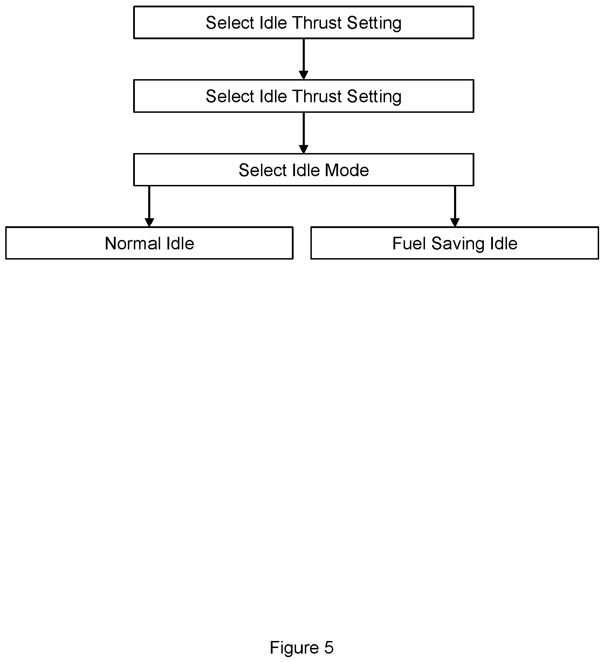

Referring now to figure 5, when an idle thrust setting is selected by the pilot, autopilot or autothrottle, the controller 34 is configured to operate the engine 10 in one of two idle modes. As will be understood, "idle thrust setting" typically refers to a minimum engine thrust setting. Conventionally, there may be one or more idle settings. For example, the engine control logic may comprise a flight idle thrust setting, which is configured to generate a minimum idle thrust during flight conditions, and a ground idle thrust setting, which is configured to generate a minimum idle thrust during ground operations. Typically, the flight idle setting is configured to generate a higher idle thrust and rotational speed than the ground idle thrust setting. This is to ensure a shorter acceleration time during flight where a higher thrust may subsequently be required in a short period of time (such as during a go-around manoeuvre).

In a first step, a thrust setting is selected. This may comprise an idle thrust setting, such as a ground idle or flight idle thrust setting.

Once an idle thrust setting is selected, an idle mode is selected. In this embodiment, two idle modes are available - a first idle mode (normal idle) and a second idle mode (fuel saving idle). The controller or user selects an idle mode depending on a number of factors.

For example, the first idle mode may be selected where an engine temperature is low, and heat input to the engine oil is required. Similarly, the first idle mode may be selected where insufficient energy is available in the energy storage unit to select the fuel saving idle mode. Alternatively, the first idle mode may be selected where there is a failure of one or more components necessary for operation in the second idle mode, such as the motor 28, generator 32 or energy storage device 30.

In the normal idle mode, fuel flow to the combustor fuel injectors is controlled, and high-speed compressor 14 rotor speed N2 is monitored. The fuel flow is modulated such that the rotor speed N2 is maintained at a target speed that ensures engine stability. The fuel flow may be controlled on the basis of model-based control, closed loop control (such as a PID controller), or any other suitable control strategy or combination of these techniques. For example, in a closed-loop strategy, high-pressure compressor rotational speed 14 may be used as an input to the control loop, with fuel flow rate as the control variable. During operation in the first mode, the motor 28 is not operated.

By "engine stability", it will be understood that, when operated in the first idle mode, the engine is self-sustaining without external assistance. It will be understood that, in a gas turbine engine, hot gas flows from the combustor drive the turbine, which in turn drive the compressor. If the temperature and pressure of gas entering the turbine is insufficient, then insufficient mechanical power will be generated by the turbine to drive the compressor at a sufficient speed to maintain operation, and the engine will stall. This can be characterised by a minimum high-pressure compressor rotational speed N2 at which stability is achieved.

In the normal mode, the engine is driven at a speed at which the engine can be accelerated to a higher thrust setting where desired. For example, if the thrust setting is changed from idle to take-off, additional fuel is added to increase the thrust. In the normal idle mode, the engine is operated at a rotational speed such that a subsequent increased fuel flow will result in the engine accelerating. In one example, the engine is driven such that the high-pressure compressor 14 is operated at a speed corresponding to 40% of its maximum certified rotational speed (40% N2).

Alternatively, the second, fuel saving mode may be selected.

In the fuel saving mode, the engine combustor 16 is operated at a lower fuel flow rate than in the first idle mode. This is enabled by actuating the electric motor 28 to drive the high-pressure compressor 14. The high-pressure compressor 14 is driven at a second predetermined rotational speed, which is a lower speed than during operation in the normal mode, and the system is no longer self-sustaining without the assistance from the motor 28. The second predetermined rotational speed may be set to a value which generates sufficient core air flow rate and pressure to maintain flame stability, i.e. such that combustion can be sustained within the combustor 16 without the flame extinguishing, and without assistance from a spark generator, but below the rotational speed of the first idle mode. In one example, the second predetermined rotational speed corresponds to 30% of the high-pressure compressor 14 maximum certified rotational speed (30% N2). In any case, the target rotational speed (typically of the high-pressure compressor) during operation in the second idle mode is lower than the corresponding target operational speed during operation in the first idle mode.

Ordinarily, operation at such low speeds would result in compressor stall or engine instability, since the turbine would not provide enough power to power the compressor. However, in view of the assistance provided by the motor, this lower rotational speed can be sustained.

In this mode, the system may again be controlled on the basis of open loop or closed loop control. For example, in closed loop operation, the control parameter may comprise electric motor 28 power input, with compressor rotational speed N2 as the control variable. For instance, the controller 34 may comprise a PID controller configured to control motor 28 torque in order to maintain rotor 14 speed N2 at a given set point, which is below the set point used in the first idle mode.

Electrical power for the motor 28 during operation in the fuel saving mode may be provided by one or both of the energy storage device 30, and the generator 32. In other cases, electrical power may be provided from a further source, such as an Auxiliary Power Unit (APU) driven electrical generator, or a ground power source. Where the gas turbine engine 10 comprises an electric generator 32 coupled to a different shaft to the motor 28, operation of the generator 32 can be used to supply the power. In this case, operation of the generator 32 effectively transfers power from the low-pressure shaft 24 to the high-pressure shaft 22. This causes drag on the low-pressure shaft, which may result in slowing of the low-pressure shaft 24 and associated fan 12. This may further reduce thrust generated by the engine, or even result in negative net-drag from windmilling of the fan 12 when the aircraft is in flight. Consequently, steeper descents can be achieved, thereby providing a further benefit of the disclosed control method.

During operation in the fuel saving mode, fuel flow rate is also controlled. For example, fuel flow rate may be controlled at such a rate that ensures flame stability. Again, the fuel flow rate may be controlled on the basis of open or closed loop control. For example, the fuel flow rate may operate on model-based control, with high-pressure compressor 14 rotational speed N2 used as the input to determine fuel flow rate. As a further alternative, fuel flow rate may be maintained at a constant low level, with the motor 28 being modulated to maintain rotor speed N2 at the predetermined value.

In view of the relatively low fuel flow rate in comparison to the air flow rate (since the compressor is still operated at a relatively high rotational speed, while the fuel flow rate is only at a rate sufficient to maintain a stable flame), the combustor may operate at a very "lean" condition, i.e. at a fuel-air ratio well below stoichiometric. In such conditions, flame stability may be difficult to maintain. Such lean conditions may also result in unacceptably high emissions of combustion products such as oxides of nitrogen (NOx).

In order to ameliorate this, only a subset of the injectors may be operated. For instance, in one embodiment, injectors 40e and 40g may be operated, with the other injectors being inoperative. This ensures that the fuel-air ratio local to the operative fuel injectors is kept within reasonable margins, while fuel flow is kept relatively low. In one embodiment, the subset of injectors that are operated are those that comprise the igniter burners, that are used for starting. Similarly, in a lean burn system, only the pilot injectors 42 may be operative, with the main injectors 44 being inoperative. In a further example, a subset of the pilot injectors 42 may be operated, with both the main injectors and the remaining pilot injectors being inoperative.

The described method has a number of advantages. When operated in the fuel saving mode, fuel flow rate is reduced, and so overall fuel consumption of the engine during operation is reduced. Operation at idle thrust settings may account for a relatively large percentage of total operation of some engines, particularly for engines which are used on short routes, or at congested airports, where extensive taxiing is required. Consequently, the invention may result in a significant fuel saving.

Additionally, the engine may be operated in the second, reduced idle mode during or shortly prior to a shutdown sequence. Typically, that sustained operation of a gas turbine engine in flight results in significant heat input to the engine and its components. These components are cooled by one or more of air flow, oil flow and fuel flow in operation. However, when the engine is shut-down, the high temperature components such as turbine blades and discs will continue to transmit heat to other components. In particular, its has been known for engine shafts to become overheated and warp when the engine is shutdown from a high temperature condition. As such, it is typical practice in some circumstances to continue to run the engine at idle for several minutes prior to shutdown following a flight, to avoid heat damage to components.

In view of the lower fuel input during the second idle mode, reduced heat is input to the engine, while cooling flows continue. Consequently, by operating the engine in the second idle mode prior to shutdown, components can be cooled more rapidly, which may enable reduced running times following flights. Consequently, additional fuel is saved due to both the reduced fuel used during idle, and the reduced running time of the engine.

Operation of only a subset of the injectors ensures that the fuel mixture is maintained at a relatively rich ratio. This may free-up design space for the injector design, since only a subset of the injectors need be designed to accommodate operation at idle settings. Furthermore, this rich (or less lean) combustion at idle may reduce overall emissions at airports, particularly in view of the reduced fuel consumption. This may enhance overall air quality at congested airports.

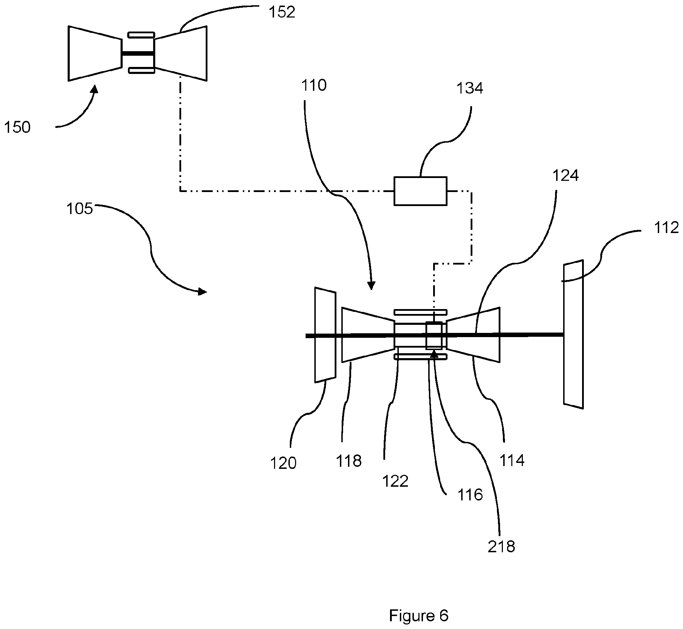

Figure 6 shows an alternative propulsion system configuration 105 for use with the aircraft 10. The propulsion system 105 is similar to the system 5, comprising a gas turbine 110 having a fan 112, compressor 114, combustor 116, high and low pressure turbines 118, 120, and high and low pressure shafts 122, 124, configured in a similar manner to the gas turbine engine 10. The propulsion system also comprises a motor 128. However, in this case, the motor 128 comprises a pneumatic or hydraulic motor 128, driven by a fluid such as air or hydraulic fluid.

In such an arrangement, air or hydraulic fluid is provided by an external source such as a hydraulic pump (not shown) or a bleed from a load compressor 152 of an APU in the form of an auxiliary gas turbine 150.

The engine 110 can be operated in a similar manner as the engine 10, with a controller 134 configured to use the control scheme outlined in figure 5 and described above, with the pneumatic or hydraulic motor being controlled (such as by flow control valves or variable vanes) to control speed.

## Claims

1. A gas turbine engine controller (34), the gas turbine engine (10) comprising:
a compressor (14);
a combustor (16); and
a motor (28) configured to drive the compressor (14); wherein the controller (34) is configured to:
in a first idle mode, control combustor (16) fuel flow to maintain compressor (14) rotational speed (N2) at or above a first predetermined value; and
in a second idle mode, control combustor fuel flow and the motor (28) to drive the compressor (14) to maintain the compressor rotational speed (N2) at or above a second predetermined value, lower than the first predetermined value; **characterised in that**:
the combustor (16) comprises a plurality of fuel injectors (40a-h), and wherein the controller (34) is configured to operate only a subset of the fuel injectors (40a-h) during operation in the second idle mode.

2. A controller according to claim 1, wherein the motor comprises one of a pneumatic motor (128), a hydraulic motor and an electric motor (28).

3. A controller according to claim 1 or claim 2, wherein the second predetermined compressor rotational speed (N2) comprises a speed sufficient to maintain compressor delivery pressure and / or mass flow at a value above a predetermined minimum necessary to sustain combustion.

4. A controller according to any of the preceding claims, wherein the combustor (16) comprises a staged lean-burn combustor (16) comprising one or more pilot injectors (42) and one or more main injectors (44).

5. A controller according to any of the preceding claims, wherein the controller is configured to operate the gas turbine engine in a starting mode, in which the engine is accelerated from an offline condition to one of the first and second idle modes.

6. A controller according to any of the preceding claims, wherein the controller is configured to operate the gas turbine engine in a shutdown mode comprising operating the gas turbine engine in the second idle mode, followed by shutting down the engine.

7. A gas turbine engine comprising a controller according to any of the preceding claims.

8. A gas turbine engine according to claim 7, wherein the gas turbine engine (10) comprises independently rotatable first and second compressors (13, 14).

9. A gas turbine engine according to claim 8, wherein the second compressor (14) is provided downstream in core flow of the first compressor (13), and the motor (13) is coupled to the second compressor (14).

10. A gas turbine according to claim 9, wherein, in a first idle mode, the controller (34) is configured to control combustor (16) fuel flow to maintain second compressor (14) rotational speed at or above the first predetermined value; and
in a second idle mode, the controller (34) is configured to control the combustor and the electric motor (28) to drive the second compressor (14) to maintain the compressor rotational speed (N2) at or above the second predetermined value, lower than the first predetermined value.

11. A method of controlling a gas turbine engine (10), the gas turbine engine (10) comprising:
a compressor (14);
a combustor (16); and
a motor (28) configured to drive the compressor (14); wherein the method comprises:
in a first idle mode, controlling combustor (16) fuel flow to maintain compressor (14) rotational speed (N2) at or above a predetermined value; and
in a second idle mode, controlling the combustor and the motor (28) to drive the compressor (14) to maintain the compressor rotational speed (N2) at or above a second predetermined value, lower than the first predetermined value; **characterised in that**:
the combustor (16) comprises a plurality of fuel injectors (40a-h), and wherein the controller (34) operates only a subset of the fuel injectors (40ah) during operation in the second idle mode.

## Patentansprüche

1. Gasturbinentriebwerkssteuerung (34), wobei das Gasturbinentriebwerk (10) Folgendes umfasst:
einen Verdichter (14);
eine Brennkammer (16); und
einen Motor (28), der konfiguriert ist, um den Verdichter (14) anzutreiben; wobei die Steuerung (34) zu Folgendem konfiguriert ist:
in einem ersten Leerlaufmodus Steuern von Brennstofffluss der Brennkammer (16), um Drehzahl (N2) des Verdichters (14) auf oder über einem ersten vorbestimmten Wert zu halten; und
in einem zweiten Leerlaufmodus Steuern von Brennkammerbrennstofffluss und des Motors (28), um den Verdichter (14) anzutreiben, um die Verdichterdrehzahl (N2) auf oder über einem zweiten vorbestimmten Wert zu halten, der niedriger als der erste vorbestimmte Wert ist; **dadurch gekennzeichnet, dass**:
die Brennkammer (16) eine Vielzahl von Brennstoffeinspritzvorrichtungen (40a-h) umfasst, und wobei die Steuerung (34) konfiguriert ist, um nur einen Teilsatz der Brennstoffeinspritzvorrichtungen (40a-h) während Betrieb in dem zweiten Leerlaufmodus zu betreiben.

2. Steuerung nach Anspruch 1, wobei der Motor eines von einem pneumatischen Motor (128), einem hydraulischen Motor und einem elektrischen Motor (28) umfasst.

3. Steuerung nach Anspruch 1 oder Anspruch 2, wobei die zweite vorbestimmte Verdichterdrehzahl (N2) eine Drehzahl umfasst, die ausreicht, um Verdichterabgabedruck und/oder Massenfluss auf einem Wert über einem vorbestimmten Minimum zu halten, das erforderlich ist, um Verbrennung aufrechtzuhalten.

4. Steuerung nach einem der vorhergehenden Ansprüche, wobei die Brennkammer (16) eine Brennkammer (16) mit stufenweiser Magerverbrennung umfasst, die eine oder mehrere Piloteinspritzvorrichtungen (42) und eine oder mehrere Haupteinspritzvorrichtungen (44) umfasst.

5. Steuerung nach einem der vorhergehenden Ansprüche, wobei die Steuerung konfiguriert ist, um das Gasturbinentriebwerk in einem Startmodus zu betreiben, in dem das Triebwerk aus einem Offline-Zustand in einen von dem ersten und dem zweiten Leerlaufmodus beschleunigt wird.

6. Steuerung nach einem der vorhergehenden Ansprüche, wobei die Steuerung konfiguriert ist, um das Gasturbinentriebwerk in einem Abschaltmodus zu betreiben, der Betreiben des Gasturbinentriebwerks in dem zweiten Leerlaufmodus, gefolgt von Abschalten des Triebwerks umfasst.

7. Gasturbinentriebwerk, umfassend eine Steuerung nach einem der vorhergehenden Ansprüche.

8. Gasturbinentriebwerk nach Anspruch 7, wobei das Gasturbinentriebwerk (10) unabhängig drehbare erste und zweite Verdichter (13, 14) umfasst.

9. Gasturbinentriebwerk nach Anspruch 8, wobei der zweite Verdichter (14) stromabwärts in Kernfluss des ersten Verdichters (13) bereitgestellt ist und der Motor (13) an den zweiten Verdichter (14) gekoppelt ist.

10. Gasturbine nach Anspruch 9, wobei in einem ersten Leerlaufmodus die Steuerung (34) konfiguriert ist, um Brennstofffluss der Brennkammer (16) zu steuern, um Drehzahl des zweiten Verdichters (14) auf oder über dem ersten vorbestimmten Wert zu halten; und
in einem zweiten Leerlaufmodus die Steuerung (34) konfiguriert ist, um die Brennkammer und den elektrischen Motor (28) zu steuern, um den zweiten Verdichter (14) anzutreiben, um die Verdichterdrehzahl (N2) auf oder über dem zweiten vorbestimmten Wert zu halten, der niedriger als der erste vorbestimmte Wert ist.

11. Verfahren zum Steuern eines Gasturbinentriebwerks (10), wobei das Gasturbinentriebwerk (10) Folgendes umfasst:
einen Verdichter (14);
eine Brennkammer (16); und
einen Motor (28), der konfiguriert ist, um den Verdichter (14) anzutreiben; wobei das Verfahren Folgendes umfasst:
in einem ersten Leerlaufmodus Steuern von Brennstofffluss der Brennkammer (16), um Drehzahl (N2) des Verdichters (14) auf oder über einem vorbestimmten Wert zu halten; und
in einem zweiten Leerlaufmodus Steuern der Brennkammer und des Motors (28), um den Verdichter (14) anzutreiben, um die Verdichterdrehzahl (N2) auf oder über einem zweiten vorbestimmten Wert zu halten, der niedriger als der erste vorbestimmte Wert ist; **dadurch gekennzeichnet, dass**:
die Brennkammer (16) eine Vielzahl von Brennstoffeinspritzvorrichtungen (40a-h) umfasst, und wobei die Steuerung (34) nur einen Teilsatz der Brennstoffeinspritzvorrichtungen (40a-h) während Betrieb in dem zweiten Leerlaufmodus betreibt.

## Revendications

1. Dispositif de commande (34) de moteur à turbine à gaz, le moteur à turbine à gaz (10) comprenant : un compresseur (14) ;
une chambre de combustion (16) ; et
un moteur (28) conçu pour entraîner le compresseur (14) ; ledit dispositif de commande (34) étant conçu pour :
dans un premier mode de ralenti, commander le flux de carburant de chambre de combustion (16) pour maintenir la vitesse de rotation (N2) du compresseur (14) à une première valeur prédéfinie ou au-dessus de celle-ci ; et
dans un second mode de ralenti, commander le flux de carburant de chambre de combustion et le moteur (28) pour entraîner le compresseur (14) afin de maintenir la vitesse de rotation (N2) du compresseur à une seconde valeur prédéfinie ou au-dessus de celle-ci, inférieure à la première valeur prédéfinie ; **caractérisé en ce que** :
la chambre de combustion (16) comprend une pluralité d'injecteurs de carburant (40a-h), et le dispositif de commande (34) étant conçu pour faire fonctionner uniquement un sous-ensemble des injecteurs de carburant (40a-h) durant le fonctionnement dans le second mode de ralenti.

2. Dispositif de commande selon la revendication 1, ledit moteur comprenant l'un d'un moteur pneumatique (128), d'un moteur hydraulique ou d'un moteur électrique (28).

3. Dispositif de commande selon la revendication 1 ou la revendication 2, ladite seconde vitesse de rotation prédéfinie (N2) du compresseur comprenant une vitesse suffisante pour maintenir la pression de distribution de compresseur et/ou le débit massique à une valeur au-dessus d'un minimum prédéfini nécessaire pour entretenir la combustion.

4. Dispositif de commande selon l'une quelconque des revendications précédentes, ladite chambre de combustion (16) comprenant une chambre de combustion à mélange pauvre étagée (16) comprenant un ou plusieurs injecteurs pilotes (42) et un ou plusieurs injecteurs principaux (44).

5. Dispositif de commande selon l'une quelconque des revendications précédentes, ledit dispositif de commande étant conçu pour faire fonctionner le moteur à turbine à gaz dans un mode de démarrage, dans lequel le moteur est accéléré à partir d'un état hors ligne vers l'un des premier et second modes de ralenti.

6. Dispositif de commande selon l'une quelconque des revendications précédentes, ledit dispositif de commande étant conçu pour faire fonctionner le moteur à turbine à gaz dans un mode d'arrêt comprenant le fonctionnement du moteur à turbine à gaz dans le second mode de ralenti, suivi par l'arrêt du moteur.

7. Moteur à turbine à gaz comprenant un dispositif de commande selon l'une quelconque des revendications précédentes.

8. Moteur à turbine à gaz selon la revendication 7, ledit moteur à turbine à gaz (10) comprenant des premier et second compresseurs (13, 14) pouvant tourner indépendamment.

9. Moteur à turbine à gaz selon la revendication 8, ledit second compresseur (14) étant prévu en aval dans le flux de noyau du premier compresseur (13), et ledit moteur (13) étant couplé au second compresseur (14).

10. Turbine à gaz selon la revendication 9, dans un premier mode de ralenti, ledit dispositif de commande (34) étant conçu pour commander le flux de carburant de chambre de combustion (16) pour maintenir la vitesse de rotation du second compresseur (14) à la première valeur prédéfinie ou au-dessus de celle-ci ; et
dans un second mode de ralenti, ledit dispositif de commande (34) étant conçu pour commander la chambre de combustion et le moteur électrique (28) pour entraîner le second compresseur (14) afin de maintenir la vitesse de rotation (N2) du compresseur à une seconde valeur prédéfinie ou au-dessus de celle-ci, inférieure à la première valeur prédéfinie.

11. Procédé de commande d'un moteur à turbine à gaz (10), le moteur à turbine à gaz (10) comprenant :
un compresseur (14) ;
une chambre de combustion (16) ; et
un moteur (28) conçu pour entraîner le compresseur (14) ; ledit procédé comprenant :
dans un premier mode de ralenti, la commande du flux de carburant de chambre de combustion (16) pour maintenir la vitesse de rotation (N2) du compresseur (14) à une valeur prédéfinie ou au-dessus de celle-ci ; et
dans un second mode de ralenti, la commande de la chambre de combustion et du moteur (28) pour entraîner le compresseur (14) afin de maintenir la vitesse de rotation (N2) du compresseur à une seconde valeur prédéfinie ou au-dessus de celle-ci, inférieure à la première valeur prédéfinie ; **caractérisé en ce que** :
la chambre de combustion (16) comprend une pluralité d'injecteurs de carburant (40a-h), et ledit dispositif de commande (34) faisant fonctionner uniquement un sous-ensemble des injecteurs de carburant (40a-h) durant le fonctionnement dans le second mode de ralenti.
